Europäisches Patentamt

European Patent Office

Office européen des brevets

(11) Publication number: **0 192 391 B1**

(12) **EUROPEAN PATENT SPECIFICATION**

(45) Date of publication of patent specification: **27.09.89**

(21) Application number: **86300875.1**

(22) Date of filing: **10.02.86**

(51) Int. Cl.⁴: $C\ 04\ B\ 35/58$

(54) **Cubic boron nitride abrasive body.**

(30) Priority: **11.02.85 ZA 851012**

(43) Date of publication of application:
**27.08.86 Bulletin 86/35**

(45) Publication of the grant of the patent:
**27.09.89 Bulletin 89/39**

(84) Designated Contracting States:
**AT BE CH DE FR GB IT LI NL SE**

(56) References cited:
**US-A-2 947 617**
**US-A-3 192 015**
**US-A-4 469 802**

(73) Proprietor: **DE BEERS INDUSTRIAL DIAMOND
DIVISION (PROPRIETARY) LIMITED
8th Floor 45 Main Street
Johannesburg Transvaal (ZA)**

(72) Inventor: **Davies, Geoffrey John
2 Marble Hall Earls Avenue
Windsor Park Randburg Transvaal (ZA)**
Inventor: **Hedges, Lesley Kay
4 Oriole Mews Delphinium Street Brackenhurst
Alberton Transvaal (ZA)**

(74) Representative: **Ellis-Jones, Patrick George
Armine et al
J.A. KEMP & CO. 14 South Square Gray's Inn
London WC1R 5EU (GB)**

Courier Press, Leamington Spa, England.

**Description**

Background of the invention

This invention relates to cubic boron nitride abrasive bodies.

Cubic boron nitride is a hard substance — second only to diamond in hardness — which has a wide variety of abrasive applications in industry. Cubic boron nitride particles may be incorporated into grinding wheels which may be used for grinding a variety of hardened ferrous materials. Cubic boron nitride may also be compounded into the form of an abrasive compact. Cubic boron nitride abrasive compacts are widely used in industry and described in many published patent specifications.

United States Patent Specification No. 4,469,802 describes the manufacture of a sintered body of cubic boron nitride which comprises the steps of:

(a) mixing raw material boron nitride selected from the group consisting of hexagonal system boron nitride, cubic system boron nitride, and a mixture thereof with Me B N (where Me represents an alkaline earth metal) in an amount of from 0.15 to 3.0 mole percent; and

(b) treating the mixed material at a temperature of 1350°C and above under a thermodynamically stabilised pressure condition with a cubic system boron nitride.

It is to be noted that essential to this process is the use of the specified alkaline earth metal boronitride compound in the mixture which is sintered and that thermodynamically stabilised pressure conditions have to be employed.

Summary of the invention

According to the present invention, there is provided a method of producing a sintered body of cubic boron nitride comprising the steps of:

(a) mixing a mass of cubic boron nitride particles with a salt-like nitride or a mixture of such nitrides, the nitride or nitrides being present in an amount of 0.007 to 2 mole percent of the mixture; and

(b) subjecting the mixture to elevated temperature and pressure conditions at which the cubic boron nitride is crystallographically stable.

A particular advantage of the method is that thermodynamically stabilised pressure conditions are not required.

Detailed description of the invention

The salt-like nitrides are nitrides of the alkali and alkaline earth metals and the nitrides of the metals of Groups IB, IIB and some Group IV metals. The preferred nitrides are the alkaline earth metal nitrides.

The salt-like nitride, which is a sintering aid material for the cubic boron nitride, is preferably used as a mixture of nitrides. An example of a suitable mixture is calcium nitride and magnesium nitride.

It is essential to the practice of the invention that the salt-like nitride is used in a very small quantity. Preferably, the mole percent of the nitride or nitrides in the mixture will be no more than 0,5 mole percent.

It is preferred that the cubic boron nitride particles are fine, e.g. having a particle size of less than 40 μm. The particles may be produced in the conventional manner. Alternatively, the cubic boron nitride particles may be produced by synthesis from hexagonal boron nitride using a salt-like nitride as the catalyst.

The temperature and pressure conditions used in producing the sintered body are such that the cubic boron nitride is crystallographically stable. The applied pressure will typically be in the range 40 to 80 kilobars while the applied temperature will typically be in the range 1300 to 2300°C.

The sintered cubic boron nitride body produced by the method of the invention contains a certain amount of direct cubic boron nitride to cubic boron nitride particle bonding or intergrowth and this contributes to the strength of the body. The sintered body will generally be produced in the form of a disc having a diameter of at least 2mm. The sintered body may thus be used for abrading, e.g. by turning, a variety of materials, particularly ferrous materials.

The sintered body is preferably crushed to produce a mass of smaller cubic boron nitride bodies or particles. Such crushing will generally produce particles of 70—1000 μm. These particles may be incorporated in conventional abrasive tools such as grinding wheels.

It has surprisingly been found that the strength of the particles is increased if the sintered body, before crushing, or the particles themselves are heat treated at a temperature of 1000°C to 1300°C for 5 to 60 minutes. The preferred treatment is at 1100°C for 5 to 60 minutes. The heat treatment is preferably carried out in a non-oxidising atmosphere such as an inert gas.

The invention will now be illustrated by the following examples.

Example 1

A mass of cubic boron nitride particles of particle size less than 40 microns was mixed with a nitride sintering aid material. The nitride sintering aid material consisted of a mixture of calcium nitride and magnesium nitride (50:50 mole mixture). The nitride sintering aid material was provided in an amount of 0.075 mole percent of the mixture. The mixture was loaded into a standard high pressure/high temperature capsule and subjected to a temperature in the range of 1650 to 1700°C and a pressure of 55 to 60 kilobars. The elevated temperature and pressure conditions were maintained for a period of 10 minutes. Recovered

# EP 0 192 391 B1

from the capsule was a disc-shaped body consisting of sintered, intergrown mass of cubic born nitride particles which was extremely hard and suitable for turning a variety of hardened steels.

## Examples 2 to 6

Using the same method as described in Example 1, sintered intergrown cubic boron nitride bodies were produced using the following sintering aid materials and amounts:

| Example | Sintering Aid Material | Mole% of Mixture |
|---------|------------------------|------------------|
| 2. | magnesium nitride | 0.1 |
| 3. | calcium nitride | 0.7 |
| 4. | strontium nitride | 0.085 |
| 5. | barium nitride | 0.056 |
| 6. | copper nitride | 0.12 |

In each case an extremely hard sintered cubic boron nitride body suitable for turning a variety of hardened steels was produced.

## Example 7

A sintered cubic boron nitride body was produced following the teachings of Example 1 save that the mixture of nitrides constituted 0.1 mole percent of the mixture. This body was placed in a conventional ring crusher and crushed to a mass of smaller bodies or particles of various sizes. Particles in three ranges were selected. The strengths of the particles were measured using the well known Friatest Index method described in the article of "The Friatester — 10 years later" by N. G. Belling and L. Bialy, Industrial Diamond Review, August 1974, pages 285 to 291. The strengths of the particles in each range were measured, first, in their as-produced state and, second, after having been subjected to heat treatment for five minutes at 1100°C in an argon atmosphere. The resulted obtained are set out below:

| Size (microns) | F.I. Before | F.I. After |
|----------------|-------------|------------|
| 177—149 | 51.0 | 82.3 |
| 149—125 | 62.0 | 86.0 |
| 105— 88 | 65.0 | 101.1 |

The F.I. or Friatest Index is a measure of the impact strength of the particle — the higher the F.I. value the stronger the particle. It can therefore be seen that the heat treatment described above significantly improved the strength of the particles in each size range.

Particles produced in this manner are suitable for incorporation in grinding wheels such as resin bond grinding wheels for the grinding of a variety of hardened and like steels.

## Claims

1. A method of producing a sintered body of cubic boron nitride comprising the steps of:
   (a) mixing a mass of cubic boron nitride particles with a salt-like nitride or a mixture of such nitrides, the nitride or nitrides being present in an amount of 0.007 to 2 mole percent of the mixture; and
   (b) subjecting the mixture to elevated temperature and pressure conditions at which the cubic boron nitride is crystallographically stable.

2. A method according to claim 1 wherein the nitride or nitrides are the alkaline earth metal nitrides.

3. A method according to claim 1 wherein there is used a mixture of nitrides, the components of the mixture being calcium nitride and magnesium nitride.

4. A method according to any one of the preceding claims wherein the nitride or nitrides are present in an amount of no more than 0.5 mole percent of the mixture.

5. A method according to any one of the preceding claims wherein the cubic boron nitride particles have a particle size of less than 40 μm.

6. A method according to any one of the preceding claims wherein the sintered body is crushed to a mass of smaller bodies or particles.

7. A method according to claim 6 wherein the smaller bodies or particles have a size of 70 to 1000 μm.

3

## EP 0 192 391 B1

8. A method according to claim 6 or claim 7 wherein the body, before crushing is heat treated at a temperature of 1000°C to 1300°C for 5 to 60 minutes.

9. A method according to claim 6 or claim 7 wherein the smaller bodies or particles are heat treated at a temperature of 1000°C to 1300°C for 5 to 60 minutes.

10. A method according to claim 8 or claim 9 wherein the heat treatment is at 1100°C for 5 to 60 minutes.

11. A method according to any one of claims 8 to 10 wherein the heat treatment is carried out in a non-oxidising atmosphere.

### Patentansprüche

1. Verfarhren zur herstellung eines Sinterkörpers aus kubischem Bornitrid, umfassend die Schritte

(a) des Vermischens einer Masse von Teilchen aus kubischem Bornitrid mit einem salzartigen Nitrid oder einem Gemisch derartiger Nitride, wobei das Nitrid oder die Nitride in einer Menge von 0,007 bis 2 Mol-% in der Mischung vorliegen, und

(b) des Einwirkenlassens von Bedingungen höherer Temperatur und höheren Drucks, bei denen das kibische Bornitrid kristallographisch stabil ist, auf die Mischung.

2. Verfahren nach Anspruch 1, worin das Nitrid oder die Nitride Erdalkalimetallnitride sind.

3. Verfahren nach Anspruch 1, worin ein Gemisch aus Nitriden verwendet wird, wobei die Komponenten des Gemischs Calciumnitrid und Magnesiumnitrid sind.

4. Verfahren nach irgendeinem der vorhergehenden Ansprüche, worin das Nitrid oder die Nitride in einer Menge von nicht mehr als 0,5 Mol-% der Mischung vorliegen.

5. Verfahren nach irgendeinem der vorhergehenden Ansprüche, worin die Teilchen aus kubischem Bornitrid eine Teilchengröße von weniger als 40 μm haben.

6. Verfahren nach irgendeinem der vorhergehenden Ansprüche, worin der Sinterkörper zu einer Masse kleinerer Körper oder Teilchen zerkleinert wird.

7. Verfahren nach Anspruch 6, worin die kleineren Körper oder Teilchen eine Größe von 70 bis 1000 μm haben.

8. Verfahren nach Anspruch 6 oder Anspruch 7, worin der Körper von dem Zerkleinern 5 bis 60 Minuten bei einer Temperatur von 1000 °C bis 1300 °C wärmebehandelt wird.

9. Verfahren nach Anspruch 6 oder Anspruch 7, worin die kleineren Körper oder Teilchen 5 bis 60 Minuten bei einer Temperatur von 1000 °C bis 1300 °C wärmebehandelt werden.

10. Verfahren nach Anspruch 8 oder Anspruch 9, worin die Wärmebehandlung 5 bis 60 Minuten bei 1100 °C durchgeführt wird.

11. Verfahren nach irgendeinem der Ansprüche 8 bis 10, worin die Wärmebehandlung in einer nichtoxidierenden Atmosphäre durchgeführt wird.

### Revendications

1. Une méthode de production d'une pièce frittée de nitrure de bore cubique comportant les étapes suivantes:

(a) On mélange une masse de particules de nitrure de bore cubique avec un nitrure de type salin ou un méelange de tels nitrures, le nitrure ou les nitrures etant présents en quantité variant de 0,007 à 2 moles pour cent du mélange; et

(b) On soumet le mélange à des conditions de température et de pression élevées pour lesquelles le nitrure de bore cubique est cristallographiquement stable.

2. Une méthode selon la revendication 1 dans laquelle le nitrure ou les nitrures sont des nitrures de métaux alcalino-terreux.

3. Une méthode selon la revendication 1 dans laquelle on utilise un mélange de nitrures, les composants du mélange étant le nitrure de calcium et le nitrure de magnésium.

4. Une méthode selon l'une quelconque des revendications précédentes dans laquelle le nitrure ou les nitrures sont présents dans une proportion qui n'est pas supérieure à 0,5 moles pour cent due mélange.

5. Une méthode selon l'une quelconque des revendications précédentes dans laquelle les particules de nitrure de bore cubique ont une taille de particule inférieure à 40 μm.

6. Une méthode selon l'une quelconque des revendications précédentes dans laquelle la pièce frittée est concassée en une masse de particules ou d'éléments plus petits.

7. Une méthode selon la revendication 6 dans laquelle les particules ou les éléments plus petits ont une taille qui varie de 70 à 1000 μm.

8. Une méthode selon la revendication 6 ou la revendication 7 dans laquelle la pièce, avant concassage, est traitée par la chaleur à une température allant de 1000°C à 1300°C pendant 5 à 60 minutes.

9. Une méthode selon la revendication 6 ou la revendication 7 dans laquelle les particules ou les

4

éléments plus petits sont traités par la chaleur à une température allant de 1000°C à 1300°C pendant 5 à 60 minutes.

10. Une méthode selon la revendication 8 ou la revendication 9 dans laquelle le traitement par la chaleur est effectué à 1100°C pendant 5 à 60 minutes.

11. Une méthode selon l'une quelconque des revendications 8 à 10 dans laquelle le traitement par la chaleur est effectué dans une atmosphère non oxydante.